# EUROPEAN PATENT SPECIFICATION

(11) **EP 3 241 958 B1**
(45) Date of publication and mention of the grant of the patent: **09.02.2022**
(21) Application number: 15864343.7
(22) Date of filing: 04.12.2015
(51) Int. Cl.: E04F 15/04, B32B 9/02, B32B 9/04, B32B 21/02, B32B 21/04

(54) **DECORATIVE MATERIAL USING CORK SHEET**
DEKORMATERIAL MIT KORKPLATTE
MATÉRIAU DÉCORATIF UTILISANT UNE FEUILLE DE LIÈGE

(30) Priority: 05.12.2014 JP 2014247339; 29.09.2015 JP 2015191979
(43) Date of publication of application: 08.11.2017
(73) Proprietor: DAI NIPPON PRINTING CO., LTD., Tokyo 162-8001 (JP)
(72) Inventor: SHIMIZU, Masafumi, Tokyo 162-8001 (JP); DOI, Kouji, Tokyo 162-8001 (JP)
(74) Representative: Müller-Boré & Partner Patentanwälte PartG mbB
(86) International application number: PCT/JP2015/084209
(87) International publication number: WO 2016/088897

(56) References cited:
- CN-A- 103 821 303
- CN-U- 202 064 593
- DE-A1-102007 008 062
- DE-A1-102010 020 962
- JP-A- H09 314 753
- JP-A- 2004 324 401
- JP-A- 2011 245 698
- JP-U- 3 053 571
- JP-U- 3 053 571

## Description

### Technical Field

The present invention relates to a decorative material comprising a cork sheet that is particularly useful as a floor decorative material.

### Background Art

Materials formed by bonding a decorative sheet having a natural-wood design to the upper surface of a wooden base material (e.g., a broadleaf tree lauan plywood) that is obtained from high-quality raw wood, via an adhesive, are known as wood-based decorative materials conventionally used as decorative materials for house floors. Such sheet-bonded flooring materials are currently widely used as housing members.

In recent years, decorative materials having the shock-absorbing properties (softness) etc. of a cork sheet have been developed by laminating a cork sheet between a wooden base material and a decorative sheet to form decorative materials. On the basis of their softness, such decorative materials are considered to have good walking feel.

For example, Patent Literature (PTL) 2 discloses "a floor panel comprising in sequential order, an insulation layer, an insulation layer comprising cork, a HDF layer, a high-density cork layer having a density of 400 to 600 kg/m3, an acrylic-based dispersion paint, an UV-cures lacquer layer and two to four sealing layers".

For example, Patent Literature (PTL). 1 discloses "a wooden flooring material comprising a cork layer and a resin sheet layer laminated in this order on the surface of a rectangular wooden base material (Claim 1)." PTL 1 discloses.that "after flooring, the resulting wooden floor can have the shock-absorbing properties and heat-retaining properties of the cork material, as well as the comfort of cork material provided to residential environments" (paragraph [0020]). PTL 1 further discloses that a polyolefin resin sheet is preferably adhesively laminated on the surface of the cork layer to protect the cork material, and that the resin sheet preferably has a thickness of about 0.03 to 0.2 mm (paragraph [0012]).

However, the wooden flooring material (decorative material) disclosed in PTL 1 is considered to have problems in terms of designability and scratch resistance due to the use of a cork layer (a cork sheet). Specifically, with respect to designability, it has been noted that since a resin sheet (a decorative sheet) is laminated on a cork sheet, orange-peel-like (hereinafter, *Yuzuhada,* in Japanese) irregularities of the cork sheet may stand out on the surface of a decorative sheet of the obtained decorative material. In particular, it has been noted that even if there are no problems immediately after production of the decorative material, *Yuzuhada* irregularities may appear after performing an environmental test (a heat resistance test or a damp heat test) . This impairs the designability of the decorative material. Further, with respect to scratch resistance, it has been noted that the disclosed wooden flooring material has particularly insufficient scratch resistance to pressure damage.

Accordingly, the development of a decorative material comprising a cork sheet and a decorative sheet laminated sequentially on a wooden base material, the material having good walking feel as well as good performance in terms of designability and scratch resistance, has been desired.

### Citation List

### Patent Literature

PTL 1: JP2004-324401A
PTL 2: DE102007008062A1

### Summary of Invention

### Technical Problem

An object of the present invention is to provide a decorative material comprising a cork sheet and a decorative sheet laminated sequentially on a wooden base material, the material having good walking feel as well as good performance in terms of designability and scratch resistance.

### Solution to Problem

The present inventors carried out extensive research to achieve the above object. As a result, the inventors found that the above object can be achieved by using a decorative sheet of a specific thickness. The present invention has been accomplished based on this finding.

Specifically, the present invention provides the following decorative materials comprising a cork sheet.
1. A decorative material comprising a cork sheet and a decorative sheet laminated sequentially on a wooden base material, the decorative sheet having a thickness of more than 0.20 mm and 0.50 mm or less, wherein the decorative sheet comprises at least a backer layer, a base material, a picture pattern layer, an adhesive layer, a transparent resin layer and a transparent surface-protecting layer, with the transparent surface-protecting layer being the uppermost surface layer, the backer layer has a Martens hardness of 10 N/mm² or more and 250 N/mm² or less and, the Martens hardness (N(mm²) of the backer layer multiplied by the square of the thickness (mm) of the backer layer is 0.3N or more and 20.0 N or less.
2. The decorative material according to Item 1, wherein the wooden base material is at least one member selected from the group consisting of medium-density wood fiberboard, high-density wood fiberboard, particleboard, coniferous tree plywood, broadleaf tree plywood, and fast-growing plywood.
3. The decorative material according to Item 1 or 2, wherein the cork sheet has a thickness of 1.0 mm or more and less than 3.0 mm. The decorative material according to any one of Items 1 to 3, wherein the uppermost surface layer of the decorative sheet is an ionizing radiation-curable resin layer.

9. The decorative material according to any one of Items 1 to 4, which has a thickness of 6 mm or more and 20 mm or less. 6

The decorative material according to any one of Items 1 to 5, which is a decorative material for floors.

### Advantageous Effects of Invention

The decorative material of the present invention has shock-absorbing properties and has good walking feel due to a cork sheet contained therein, and also has good performance in terms of designability and scratch resistance due to a decorative sheet of a specific thickness laminated thereon. More specifically, the decorative material of the present invention overcomes the problem such that *Yuzuhada* irregularities stand out on the surface following production of a decorative material or after performing an environmental test (a heat resistance test or a damp heat test), and also has excellent resistance to pressure damage.

### Brief Description of Drawings

Fig. 1 is a cross-sectional schematic diagram illustrating an embodiment of the decorative material comprising a cork sheet of the present invention.
Fig. 2 is an outline view of a compression test device used in a compression test for decorative materials.
Fig. 3 (a-1, a-2) shows diamond indenters used in the measurement of Martens hardness in this specification; Fig. 3 (b) shows a schematic diagram of a press operation; and Fig. 3 (c) shows an example of a press load and displacement.

### Description of Embodiments

The decorative material comprising a cork sheet of the present invention (hereinafter sometimes simply referred to as "the decorative material of the present invention") comprises a cork sheet and a decorative sheet laminated sequentially on a wooden base material, the decorative sheet having a thickness of more than 0.20 mm and 0.50 mm or less.

The decorative material of the present invention, which has the above characteristics, has shock-absorbing properties and provides good walking feel due to a cork sheet contained therein, and also has good performance in terms of designability and scratch resistance due to a decorative sheet of a specific thickness laminated thereon. Specifically, the decorative material of the present invention overcomes the problem such that *Yuzuhada* irregularities stand out on the surface following production of the decorative material or after performing an environmental test (a heat resistance test or a damp heat test), and also has excellent resistance to pressure damage.

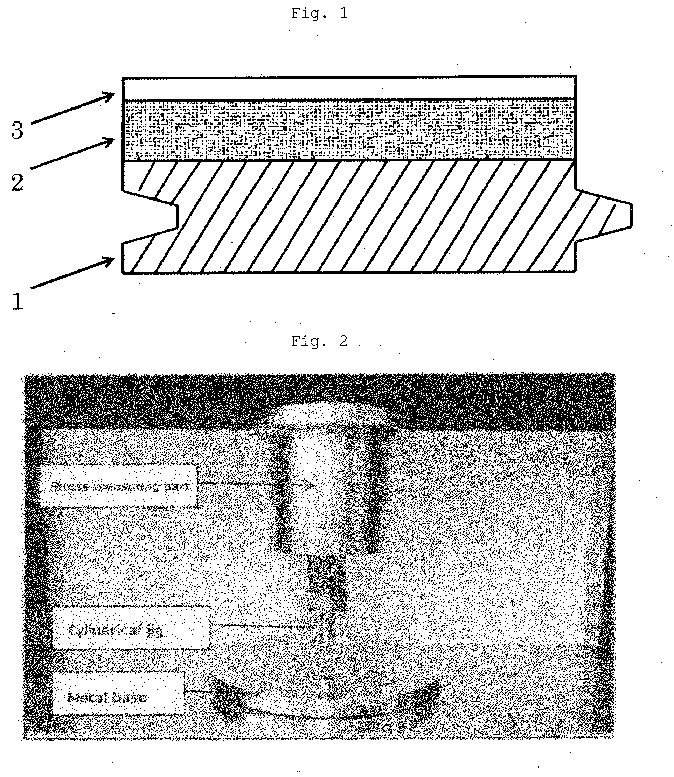

Each layer constituting the decorative material of the present invention is described below with reference to Fig. 1. In this specification, the direction or side where the cork sheet 2 is disposed, as viewed from the wooden base material 1, is referred to as "above" or "the front surface," whereas the side opposite the direction or side where the cork sheet 2 is disposed, as viewed from the wooden base material 1, is referred to as "below" or "the back surface."

### Wooden base material 1

Although the wooden base material 1 is not limited, at least one member selected from the group consisting of medium-density wood fiberboard (MDF), high-density wood fiberboard (HDF), particleboard (PB), coniferous tree plywood, broadleaf tree plywood, and fast-growing tree plywood can be used. Examples of coniferous trees include Sakhalin fir, Japanese larch, Yezo spruce, Japanese cedar, hinoki cypress, pine, sequoia, Hondo spruce, and the like. Examples of broadleaf trees include lauan, Japanese linden, birch, castor aralia, Japanese beech, oak, meranti, and the like. Examples of fast-growing trees include poplar, falcata, acacia, Kamerere, eucalyptus, Terminalia, and the like.

The density of the wooden base material 1 is not limited. When resistance to pressure damage is considered to be important, wooden base materials with a density of 0.40 g/cm³ or more and 1.00 g/cm³ or less, particularly 0.60 g/cm³ or more and 0.95 g/cm³ or less, are preferably used. When walking feel is considered to be important, wooden base materials with a density of less than 0.60 g/cm³, particularly 0.30 g/cm³ or more and 0.50 g/cm³ or less, are preferably used.

When a plywood, such as a coniferous tree plywood, broadleaf tree plywood, or fast-growing plywood, is used, the number of stacked plywood layers (number of plys) is not limited. It is usually preferable that the number of plys be 3 to 7, and more preferably 5 to 7. The adhesive used at the time of producing plywood is not particularly limited. Known woodworking adhesives may be widely used. Examples of adhesives include adhesives containing, as an active ingredient, polyvinyl acetate, polyvinyl chloride, vinyl chloride-vinyl acetate copolymers, ethylene-acrylic acid copolymers, ionomers, butadiene-acrylic nitrile rubber, neoprene rubber, natural rubber, or the like.

The thickness of the wooden base material 1 is not restrictive. The thickness is preferably 2 mm or more and 20 mm or less, and more preferably 2 mm or more and 15 mm or less.

### Cork sheet 2

The cork sheet 2 is not particularly limited, as long as it can impart good walking feel to the decorative material of the present invention. Various commercially available products can be used.

As the cork sheet 2 used in the present invention, any of so-called "natural cork" and "synthetic cork" can be used. Natural cork is a highly elastic material produced by peeling and processing the phellem of cork oak bark. Synthetic cork is produced by imitating natural cork.

The density of the cork sheet 2 is preferably 0.1 g/cm³ or more and 0.5 g/cm³ or less. The lower limit is more preferably 0.2 g/cm³ or more. The density is more preferably more than 0.3 g/cm³ and 0.5 g/cm³ or less, and even more preferably 0.4 g/cm³ or more and 0.5 g/cm³ or less.

In view of imparting good walking feel to the decorative material, the cork sheet 2 preferably has a thickness of 1.0 mm or more, more preferably 1.0 mm or more and less than 3.0 mm, and even more preferably 1.5 mm or more and 2.0 mm or less.

The cork-sheet 2 may be a single layer, or may be a laminate of cork sheets having different elastic moduli and/or densities. When a laminate of cork sheets having different densities is used, it is preferable from the viewpoint of enhancing resistance of the decorative material to pressure damage that the cork sheet in contact with the decorative sheet has a higher density than other cork sheets.

The Martens hardness of the cork sheet 2 is not particularly limited, and can be appropriately selected according to the characteristics of the final product. The Martens hardness of the cork sheet 2 is usually 1.0 N/mm² or more and 20.0 N/mm² or less, and more preferably 2.5 N/mm² or more and 7.0 N/mm² or less.

In this specification, the Martens hardness of the cork sheet 2 refers to a value measured using a surface film physical property tester (PICODENTOR HM-500, produced by Fischer Instruments K.K.). A specific measurement method is as follows.

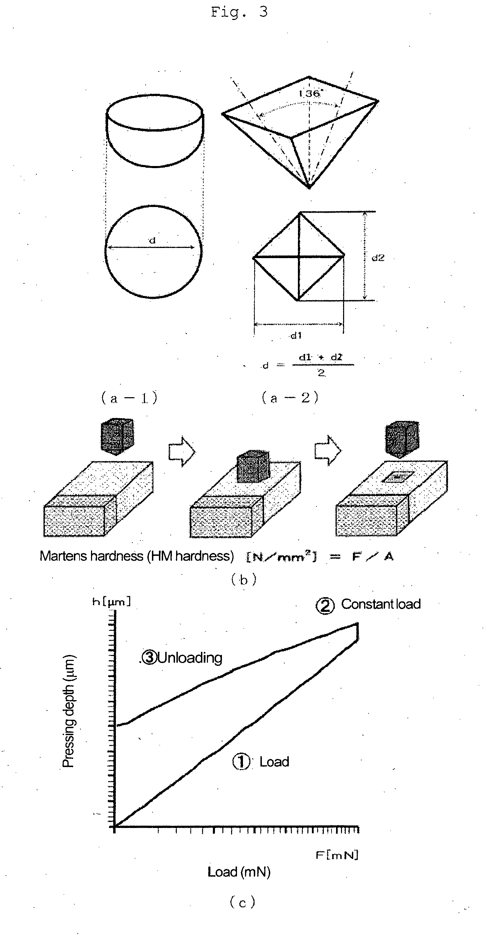

In this measurement method, a diamond indenter shown in Fig. 3 (a-1) is pressed into each measurement sample as shown in Fig. 3 (b). The surface area A (mm²) is calculated from the length of the diameter of a bowl-like dent formed on the surface, and test load F (N) is divided by the surface area A to thereby determine the hardness.

The pressing conditions are as follows. As shown in Fig. 3 (c), first, 0 to 300 mN load is applied for 10 seconds at room temperature. Next, 300 mN load is maintained for 5 seconds. Finally, unloading is performed from 300 to 0 mN for 10 seconds. The hardness determined by F/A, wherein A is surface area and F is test load, is the Martens hardness mentioned above.

In this specification, the Martens hardness of the cross-section of the cork sheet was measured so as to avoid the influence of the hardness of layers other than the cork sheet 2. For this measurement, the cork sheet 2 was embedded in a resin (cold-curing-type epoxy two-component curable resin) and allowed to stand at room temperature for at least 24 hours for curing. The cured embedded sample was then mechanically polished to expose the cross-section of the cork sheet 2, and the diamond indenter was pressed into the cross-section to thereby measure the Martens hardness of the cross-section.

The Martens hardness of the cork sheet 2 can be appropriately set, for example, by 1) adjusting the hardness of the resin or 2) adjusting the hardness of cork oak or synthetic cork.

### Decorative sheet 3

The decorative sheet 3 is not particularly limited, as long as its thickness is more than 0.20 mm and 0.50 mm or less. The thickness is preferably more than 0.20 mm and 0.45 mm or less, and more preferably 0.30 mm or more and 0.45 mm or less.

A preferable embodiment of the decorative sheet 3 is, for example, a sheet configured such that at least a picture pattern layer, an adhesive layer, a transparent resin layer, and a transparent surface-protecting layer are disposed on or above a base sheet material, with the transparent protecting layer being the uppermost surface layer. The uppermost surface layer of the decorative sheet may have a concave-convex pattern formed by embossing. The thickness of the decorative sheet layer referred to herein is the average of ten thickness values measured at flat points other than the portion with a concave-convex pattern formed by embossing described below. The thickness of this decorative sheet can be determined by observing the cross-section of the decorative sheet. One example of such a measurement method is a method comprising cutting a decorative sheet, taking a photograph from the cross-sectional direction of the cut portion, and determining the thickness from the photograph.

Each layer of the decorative sheet 3 is described below with reference to the above embodiment as a representative example.

### Base material sheet

A picture pattern layer etc. are sequentially laminated on the surface (front surface) of the base material sheet.

Examples of preferable base material sheets include those formed using thermoplastic resins. Specific examples of thermoplastic resins include polyvinyl chloride, polyethylene terephthalate, polybutylene terephthalate, polyamide, polyethylene, polypropylene, polycarbonate, polyethylene naphthalate, ethylene-vinyl acetate copolymers, ethylene-acrylic acid copolymers, ethylene-acrylic ester copolymers, ionomers, acrylic acid esters, methacrylic acid esters, and the like. Among these, polypropylene or like polyolefins are preferable.

The base material sheet may be colored. In this case, colorants (pigments or dyes) may be added to such thermoplastic resins as described above. Examples of usable colorants include inorganic pigments such as titanium dioxide, carbon black, and iron oxide; organic pigments such as phthalocyanine blue; and various dyes. Such colorants may be selected from one or more known or commercially available products. The amount of colorants may be selected according to the desired color etc.

The base material sheet may contain, as needed, various kinds of additives, such as fillers, matting agents, foaming agents, flame retardants, lubricants, antistatic agents, antioxidants, ultraviolet absorbers, and light stabilizers.

The thickness of the base material sheet can be suitably selected according to the purpose of use, application method, etc., of the final product. In general, the base material sheet preferably has a thickness of 50 µm or more and 250 µm or less.

The surface (front surface) of the base material sheet may be subjected to a corona discharge treatment in order to enhance the adhesiveness of inks that form a picture pattern layer. The corona discharge treatment method and the conditions therefor may be performed according to known methods. The back surface of the base material sheet may be subjected to a corona discharge treatment or a back-surface primer layer may be formed, as needed.

### Picture pattern layer (pattern layer)

The picture layer imparts a desired picture (design) to the decorative sheet 3, and the kind etc. of the picture are not limited. Examples include wood grain patterns, marble grain patterns, pebbly patterns, tiled patterns, brick-masonry patterns, textile patterns, leather patterns, geometric figures, characters, symbols, abstraction patterns, and the like.

The method of forming a picture layer is not particularly limited. For example, the picture layer may be formed on,the surface of a base material sheet by a printing method using color ink obtained by dissolving (or dispersing) a known colorant (dye or pigment) together with a binding resin in a solvent (or a dispersion medium).

Examples of colorants include inorganic pigments, such as carbon black, titanium white, zinc oxide, red iron oxide, Berlin blue, and cadmium red; organic pigments, such as azo pigments, lake pigments, anthraquinone pigments, quinacridone pigments, phthalocyanine pigments, isoindolinone pigments, and dioxazine pigments; metallic powder pigments, such as aluminium powder and bronze powder; pearlescent pigments, such as titanium oxide-coated mica and bismuth chloride oxide; fluorescent pigments; noctilucent pigments; and the like. Such colorants may be used singly, or in a combination of two or more. These colorants may contain a filler such as silica, an extender pigment such as organic beads, a neutralizer, a surfactant, and the like.

Examples of binding resins include polyester-based urethane resins, hydrophilized polyester-based urethane resins, and the like, which can be used in combination with polyesters, polyacrylates, polyvinyl acetate, polybutadiene, polyvinyl chloride, chlorinated polypropylene, polyethylene, polystyrene, polystyrene-acrylate copolymers, rosin derivatives, alcohol adducts of styrene-maleic anhydride copolymers, cellulose-based resins, and the like.

Specific examples of usable binding resins include polyurethane-polyacrylic-based resins, polyacrylamide-based resins, poly(meth)acrylate-based resins, polyethylene oxide-based resins, poly N-vinyl-pyrrolidone-based resins, water-soluble polyester-based resins, water-soluble polyamide-based resins, water-soluble amino-based resins, water-soluble phenolic resins, and other water-soluble synthetic resins; water-soluble natural polymers such as polynucleotides, polypeptides, and polysaccharides; and the like. Other examples include natural rubber, synthetic rubber, polyvinyl acetate-based resins, (meth)acrylic acid based-resins, polyvinyl chloride-based resins, modified or mixed polyurethane-polyacrylic-based resins, and other resins. Such binding resins may be used singly, or in a combination of two or more.

Examples of printing methods for forming the picture layer include gravure printing, offset printing, screen printing, flexo printing, electrostatic printing, ink jet printing, and the like. When a solid-like picture pattern layer (also referred to as a color-concealing layer) is formed over the entire surface, various coating methods, such as gravure coating, reverse gravure coating, roll coating, knife coating, air knife coating, dye coating, lip coating, comma coating, kiss coating, flow coating, and dip coating, can be used.

In addition to the above, examples of usable methods include hand-drawing methods, marbling methods, photographic methods, transfer methods, laser beam drawing methods, electron beam drawing methods, metal partial deposition methods, etching methods, and the like. Such methods may be used in combination with other methods.

The thickness of the picture layer is not particularly limited, and can be appropriately selected according to the characteristics of the product. The layer thickness may usually be 0.1 µm or more and 10 µm or less.

### Adhesive Layer

An adhesive layer is provided between the picture layer and a transparent resin layer. The adhesive contained in the adhesive layer may be suitably selected according to, for example, the components of the picture layer or the transparent resin layer. For example, various adhesives containing polyurethane-based resins, polyacrylic resins, polycarbonate-based resins, epoxy-based resins, or the like can be used. Not only reaction-curable adhesives but also hot melt adhesives, ionizing radiation-curable adhesives, ultraviolet-curable adhesives, and like adhesives are usable.

The adhesive layer may be transparent or translucent, as long as the picture layer can be recognized.

In the present invention, an adhesive surface may be subjected to a known easy-adhesion treatment, such as corona discharge treatment, plasma treatment, degreasing treatment, or surface roughening treatment, as needed.

The adhesive layer can be formed, for example, by applying an adhesive on a picture pattern layer, drying once, and then laminating a transparent resin. The method for application of the adhesive is not particularly limited. For example, roll coating, curtain flow coating, wire bar coating, reverse coating, gravure coating, reverse gravure coating, air knife coating, kiss coating, blade coating, smooth coating, comma coating, and the like can be used.

The thickness of the adhesive layer varies depending on, for example, the kinds of transparent protecting layer and adhesive used, but may usually be about 0.1 µm or more and 30 µm or less.

### Transparent resin layer

The transparent resin layer may be colored as long as it is transparent, or may be translucent so far as the picture pattern layer can be observed.

Examples of the usable resins include polyvinyl chloride, polyethylene terephthalate, polybutylene terephthalate, polyamide, polyethylene, polypropylene, ethylene-vinyl acetate copolymers, ethylene-acrylic acid copolymers, ethylene-acrylic ester copolymers, ionomers, polymethylpentene, acrylic acid esters, methacrylic acid esters, polycarbonate, cellulose triacetate, and the like. Among these, polypropylene or like polyolefin-based resins are preferable, and polyolefin-based resins having stereoregularity are more preferable. When polyolefin-based resins are used, it is desirable that the transparent resin layer be formed by extruding a molten polyolefin-based resin.

The transparent resin layer may contain, as needed, various kinds of additives, such as fillers, matting agents, foaming agents, flame retardants, lubricants, antistatic agents, antioxidants, ultraviolet absorbers, light stabilizers, radical scavengers, and soft components (e.g., rubber).

The thickness of the transparent resin layer is not particularly limited. The thickness may usually be about 10 µm or more and 400 µm or less.

### Transparent surface-protecting layer

A transparent surface-protecting layer is formed on the transparent resin layer. The surface-protecting layer preferably contains an ionizing radiation-curable resin or a two-component curable urethane-based resin as a resin component, although this is not limitative. It is preferable that the surface-protecting layer be substantially formed of these resins. When the surface-protecting layer is formed using an ionizing radiation-curable resin or a two-component curable urethane-based resin, the abrasion resistance, impact resistance, stain resistance, scratch resistance, weather resistance, etc., of the decorative sheet 3 can be easily enhanced. In the present invention, it is particularly preferable that the uppermost layer be an ionizing radiation-curable resin layer.

The ionizing radiation-curable resin is not particularly limited. Examples of usable ionizing radiation-curable resins include transparent resins comprising, as a main component, a prepolymer (including an oligomer) and/or a monomer containing, in the molecule, a radically polymerizable double bond that can undergo a crosslinking polymerization reaction by ionizing radiation, such as irradiation with ultraviolet rays or electron beams. Such prepolymers or monomers can be used singly, or in a combination of two or more. The curing reaction is usually a crosslinking curing reaction.

Specific examples of such prepolymers or monomers include compounds that contain, in the molecule, a radically polymerizable unsaturated group, such as a (meth)acryloyl group or a (meth)acryloyloxy group; and a cation-polymerizable functional group, such as an epoxy group. Polyene/thiol-based prepolymers comprising polyene and polythiol in combination are also preferable. In this specification, a (meth)acryloyl group means an acryloyl group or a methacryloyl group.

Examples of prepolymers comprising a radically polymerizable unsaturated group include polyester (meth) acrylate, urethane (meth)acrylate, epoxy (meth)acrylate, melamine (meth)acrylate, triazine (meth)acrylate, silicone (meth) acrylate, and the like. It is usually preferable that such prepolymers have a molecular weight of 250 or more and 100,000 or less.

Examples of monomers comprising a radically polymerizable unsaturated group include monofunctional monomers, such as methyl (meth)acrylate, 2-ethylhexyl (meth)acrylate, and phenoxyethyl (meth)acrylate. Examples of multifunctional monomers include diethylene glycol di(meth)acrylate, propylene glycol di(meth)acrylate, trimethylolpropane tri(meth)acrylate, trimethylolpropane ethylene oxide tri(meth)acrylate, dipentaerythritol tetra(meth)acrylate, dipentaerythritol penta(meth)acrylate, dipentaerythritol hexa(meth)acrylate, and the like.

Examples of prepolymers comprising a cation-polymerizable functional group include prepolymers of epoxy-based resins, such as bisphenol-type epoxy resins and novolac-type epoxy compounds; and prepolymers of vinyl ether-based resins, such as fatty acid-based vinyl ethers and aromatic vinyl ethers. Examples of thiols include polythiols, such as trimethylolpropane trithioglycolate and pentaerythritol tetrathioglycolate. Examples of polyenes include polyurethanes from diol and diisocyanate, wherein allyl alcohol is added to each end thereof.

Electromagnetic waves or charged particles having energy high enough to cause the curing reaction of molecules of ionizing radiation-curable resin (composition) are used as the ionizing radiation to cure the ionizing radiation-curable resin. Ultraviolet rays or electron beams may usually be used. Visible light, X-rays, ionic rays, or the like may also be used.

Examples of ultraviolet ray sources include light sources, such as ultra-high-pressure mercury lamps, high-pressure mercury lamps, low-pressure mercury lamps, carbon arc lamps, black lights, and metal halide lamps. It is usually preferable that the ultraviolet rays have a wavelength of 190 nm or more and 380 nm or less.

Examples of electron beam sources include various electron beam accelerators, such as a Cockcroft-Walton accelerator, Van de Graaff accelerator, resonance transformer accelerators, insulation-core-transformer-type accelerators, linear accelerators, dynamitron accelerators, and high-frequency accelerators. Among these, electron beam sources capable of irradiating electrons having an energy of 100 keV or more and 1000 keV or less, preferably 100 keV or more and 300 keV or less, are preferable.

The two-component curable urethane-based resins are not particularly limited. Examples of usable resins include those comprising a polyol component (e.g., acrylic polyol, polyester polyol, polyether polyol, epoxy polyol, etc.) having OH group as a main compound, and an isocyanate component (e.g., tolylene diisocyanate, hexamethylene diisocyanate, metaxylene diisocyanate, etc.), which is a curing agent component.

The transparent surface-protecting layer may contain, as needed, plasticizers, stabilizers, fillers, dispersants, colorants such as dyes and pigments, solvents, and the like.

The transparent surface-protecting layer can be formed, for example, by applying an ionizing radiation-curable resin or a two-component curable urethane-based resin to a transparent polypropylene-based resin layer by a known coating method, such as gravure coating or roll coating, and then curing the resin. When an ionizing radiation-curable resin is used, the resin is cured by irradiating electron beams.

The thickness of the transparent surface-protecting layer is not particularly limited and can be appropriately selected according to the characteristics of the final product. The thickness is usually 0.1 µm or more and 50 µm or less, and preferably 1 µm or more and 20 µm or less.

The Martens hardness of the transparent surface-protecting layer is not particularly limited, and can be appropriately selected according to the characteristics of the final product. The Martens hardness is usually 30 N/mm² or more and 250 N/mm² or less, and preferably 100 N/mm² or more and 200 N/mm² or less.

In this specification, the Martens hardness is a measurement value obtained using a surface film physical property tester (PICODENTOR HM-500, a product of Fischer Instruments). The specific measurement method is as follows.

This measurement method comprises pressing a diamond indenter (Vickers indenter), shown in Fig. 3 (a-2), into a measuring sample, as shown in Fig. 3 (a-2), calculating the surface area A (mm²) from the length of the diagonal lines of the pyramidal cavity formed on the surface, and dividing the test load F (N) by the surface area A to thereby determine the hardness.

The pressing conditions are as follows. First, 0 to 5 mN load is applied for 10 seconds at room temperature (laboratory environmental temperature), as shown in the conceptual diagram of Fig. 3(c). Next, 5 mN load is maintained for 5 seconds. Finally, unloading is performed from 5 to 0 mN for 10 seconds. Then, the hardness determined by F/A, wherein A is surface area and F is test load, is the Martens hardness mentioned above.

In this specification, in order to avoid the influence of the hardness of layers other than the transparent surface-protecting layer, the Martens hardness of the cross-section of the transparent surface-protecting layer was measured. For this measurement, the decorative sheet was embedded in a resin (cold-curing-type epoxy two-component curable resin) and cured by allowing it to stand at room temperature for at least 24 hours. The cured embedded sample was then mechanically polished to expose the cross-section of the transparent surface-protecting layer, and a diamond indenter was pressed into the cross-section to thereby measure the Martens hardness of the cross-section.

The Martens hardness of the transparent surface-protecting layer can be suitably set, for example, by 1) mixing resin components, or 2) adding an elastomer to the resin.

### Embossing

A decorative sheet intermediate may be embossed from the transparent surface-protecting layer side.

The embossing is conducted to impart a desired texture, such as wood grain patterns, to the decorative sheet. For example, after the transparent protecting layer is softened by heating, the softened transparent protecting layer is pressed and shaped by using an embossing plate having a desired concave-convex pattern, and the transparent protecting layer is then solidified by cooling to provide a texture. The embossing may be conducted using a known sheet-fed embossing machine or rotary embossing machine.

Examples of the concave-convex patterns applied by embossing include wood-grain vessel patterns, bosses (concave-convex patterns of annual rings that stand out), hairline patterns, grain patterns, mat patterns, and the like.

When embossing is applied, ink may be filled into the embossed concave portions by wiping as needed. For example, ink may be filled into the embossed concave portions while plowing the surface thereof with a doctor blade. Ink containing a two-component curable urethane resin as a binder can usually be used as the ink to be filled (wiping ink). In particular, when a wood-grain vessel-like concave-convex pattern is subjected to wiping, a design more close to actual wood grain can be attained, thus increasing the value of the product.

In the present invention, the transparent surface-protecting layer may contain other components. For example, solvents, ultraviolet absorbers, antioxidants, dispersants, photostabilizers, gloss-controlling agents, antiblocking agents, lubricants, and like additives may be added thereto.

### Backer layer

The decoration sheet 3 must comprise a so-called backer layer (synthetic resin layer) on the back side of the base material sheet. The backer layer refers to a relatively thick synthetic resin layer provided as a part of the decorative sheet 3, and imparting shock-absorbing properties to the decorative sheet 3. The decorative sheet 3 has a layer structure comprising at least a backer layer, a base material sheet, an adhesive layer, a transparent resin layer, and a transparent surface-protecting layer.

In this section, the backer layer is hereinafter indicated as synthetic resin layer.

The synthetic resin layer preferably comprises a polyolefin-based resin as a resin component.

Examples of polyolefin-based resins include polyethylenes (high-density polyethylene, medium-density polyethylene, low-density polyethylene), polypropylene, and the like. These can be used singly, or in a combination of two or more. Among these, polypropylene is particularly preferable. Examples of the polypropylene include homopolypropylene, random polypropylene, block polypropylene, and the like. Among these, homopolypropylene is particularly preferable.

Resin components other than the polyolefin-based resins described above may also be used as a resin component of the synthetic resin layer. Examples include vinyl chloride resin, polystyrene, polyamide resin, polyimide resin, polyamideimide resin, fluororesin, urethane resin, polysulfone, polycarbonate, polyacetal, polyphenylene ether, methacrylic resin, acrylonitrile-styrene resin, acrylonitrile-butadiene-styrene resin, polyethylene naphthalate (PEN), polyethylene terephthalate (PET), polybutylene terephthalate (PBT), polyarylate, amorphous polyethylene terephthalate (so-called A-PET) (a product of Mitsubishi Chemical Corporation: Novaclear (trade name)), a polyethylene terephthalate copolymer (so-called PETG), and the like. Among these, A-PET is particularly preferable. A-PET is preferably used with PEN to impart heat resistance.

The content of the polyolefin-based resin in the synthetic resin layer is preferably 90 mass% or more and 100 mass% or less, and more preferably 95 mass% or more and 100 mass% or less.

The synthetic resin layer preferably contains a crystallization nucleating agent. The tensile elastic modulus of the synthetic resin layer can be enhanced by containing a crystallization nucleating agent. Examples of the crystallization nucleating agent include bis(p-methylbenzylidene)sorbitol, sodium 2,2'-methylenebis(4,6-di-t-butylphenyl)phosphate, metal salts of rosin, metal salts of rosin derivatives, metal salts of benzoic acid, and the like. Examples of metal salts of rosin, metal salts of rosin derivatives, and metal salts of benzoic acid include sodium salts, copper salts, zinc salts, and like salts. These crystallization nucleating agents can be used alone, or in a combination of two or more. In the present invention, at least one member selected from the group consisting of bis(p-methylbenzylidene)sorbitol and sodium 2,2'-methylenebis(4,6-di-t-butylphenyl)phosphate is preferable for use as a crystallization nucleating agent. The crystallization nucleating agent content is appropriately selected so that the synthetic resin layer described below has a Martens hardness of 10 N/mm² or more. The crystallization nucleating agent content is usually 0.05 parts by mass or more and 0.4 parts by mass or less, and is preferably 0.1 parts by mass or more and 0.3 parts by mass or less, based on 100 parts by mass of the resin component of the synthetic resin layer.

The synthetic resin layer may be formed by laminating the resin composition comprising the resin component or the like on a base material sheet, for example, by calendering, inflation molding, T-die extrusion, or like methods. A known film may also be used as the synthetic resin layer.

The thickness of the synthetic resin layer is not particularly limited. The thickness is usually 50 µm or more and 210 µm or less, and preferably 100 µm or more and 200 µm or less.

The Martens hardness of the synthetic resin layer is 10 N/mm² or more and 250 N/mm² or less, and preferably 20 N/mm² or more and 200 N/mm² or less. In addition to this condition, when the Martens hardness (N/mm²) of the synthetic resin layer multiplied by the square of the thickness (mm) of the synthetic resin layer is 0.3 N or more and 20.0 N or less, the resulting product has both softness (good walking feel) and impact resistance (resistance against a dropped object).

The Martens hardness of the synthetic resin layer can be suitably set, for example, by 1) mixing resin components or 2) adding an elastomer to the resin.

### Function of decorative sheet 3

The decorative sheet 3 described above may have any thickness in the range of more than 0.20 mm and 0.50 mm or less. Within this range, the thickness is preferably more than 0.20 mm and 0.45 mm or less, and more preferably 0.30 mm or more and 0.45 mm or less.

When the thickness of the decorative sheet 3 is within the range described above, the decorative material of the present invention has good performance in terms of designability and scratch resistance, as well as good walk feeling. Specifically, the problem such that *Yuzuhada* irregularities of a cork sheet stand out on the surface following production of the decorative material or after performing an environmental test (a heat resistance test or a damp heat test) is overcome, and excellent resistance to pressure damage is also imparted.

### Physical properties of and production method for the decorative material of the present invention

The decorative material of the present invention can be produced by laminating a wooden base material 1, a cork sheet 2, and a decorative sheet 3 via an adhesive. The thickness of the decorative material is not particularly limited. The decorative material preferably has a thickness of 6 mm or more and 20 mm or less, and more preferably 10 mm or more and 15 mm or less.

The adhesive for use is not limited. Examples include polyvinyl acetate, polyvinyl chloride, vinyl chloride-vinyl acetate copolymers, ethylene-acrylic acid copolymers, ionomers, butadiene-acrylonitrile rubber, neoprene rubber, natural rubber, and the like. These adhesives are used alone, or in a combination of two or more.

From the viewpoint of obtaining good walking feel, the decorative material of the present invention preferably has a displacement of 100 µm or more, more preferably 100 µm or more and 250 µm or less, and still more preferably 120 µm or more and 200 µm or less, under a load of 100 N, when compressed by pressing thereinto a cylindrical jig with a diameter of 10 mm from the decorative sheet side at a constant speed using a compression test device. When the decorative material has such a level of displacement (softness), good walking feel can be easily obtained. Specifically, a compression test device shown in Fig. 2 is prepared and a decorative plate as a measurement sample is placed on a metal base of the test device. While the decorative sheet is compressed by pressing thereinto a cylindrical jig with a diameter of 10 mm (with the bottom surface of the cylindrical jig being parallel to the metal base surface) at a constant speed, the displacement is measured under a load of 100 N. In this measurement, the measurement sample is disposed on the metal base in such a manner that the cylindrical jig comes into contact with the decorative sheet side.

The measuring apparatus and measurement conditions are as follows.
- Compression test device (a product of A&D Company, Limited, a compression tensile tester, model number: RTC-1250A, LOAD CELL: UR-1KN-D)
- Measurement sample shape: 4 cm by 4 cm
- Compression rate: 10 mm/min
- Cylindrical jig: a cylindrical tapering jig with a diameter of 10 mm

The decorative material of the present invention overcomes the problem such that *Yuzuhada* irregularities stand out on the surface following production of the decorative material or after performing an environmental test (a heat resistance test or a damp heat test), and also has excellent resistance to pressure damage. The heat resistance test referred to herein is a test performed under the conditions in which the sample is left in an oven at a temperature of 60°C for 1 week. The damp heat test referred to herein is a test performed under the conditions in which the sample is left at a temperature of 40°C and a humidity of 90% for 1 week. The decorative material of the present invention is such that no *Yuzuhada* irregularities of the cork sheet or only a slight degree (an acceptable level of) *Yuzuhada* irregularities is confirmed under any of the conditions for producing the decorative material and the conditions for performing the environmental test.

The resistance to pressure damage was evaluated in a pencil hardness test (load: 750 g), based on the hardness of the pencil core at which scratches or dents occur. When no scratches or dents were visually observed with the use of a pencil having a core hardness of as soft as 3B or more, the decorative sheet was evaluated as having good scratch resistance.

Such decorative plates of the present invention can be used, for example, for interior materials of buildings, such as walls, ceilings, and floors; exterior materials, such as balconies and verandas; surface decorative plates of fittings, such as sashes, doors, and balustrades, and furniture; surface decorative plates of cabinets of light electrical appliances and office automation equipment; and the like. In particular, the decorative plate can be preferably used as a decorative material for floors.

### Examples

The present invention is specifically described below with reference to Examples and Comparative Examples. However, the present invention is not limited to the Examples.

### Example 1 (Production of decorative material)

A picture-printing layer was formed by gravure printing on a 0.06 mm-thick colored polypropylene sheet as a base material sheet.

Subsequently, a 0.08 mm-thick transparent polypropylene-based resin film was bonded to the picture-printing layer using a urethane-based dry lamination adhesive.

Subsequently, an electron beam-curable transparent surface-protecting layer was formed to a thickness of 0.015 mm on the transparent resin layer, thus obtaining a sheet with a thickness of 0.16 mm.

Subsequently, after a polypropylene-based transparent resin layer with a thickness of 0.06 mm was formed as a backer layer on the back side of the sheet with a thickness of 0.16 mm by thermal adhesion, a primer for back surfaces was applied to obtain a decorative sheet.

A 2-mm-thick cork sheet was adhered to a 9-mm-thick Sakhalin fir plywood as a wooden base material. Finally, a decorative sheet was bonded thereto to obtain a decorative material.

The adhesive used to bond the wood plywood and the cork sheet together and to bond the cork sheet and the decorative sheet together was a vinyl acetate-based emulsion adhesive (7 g/(303 mm x 303 mm square).

(Ratio of adhesive components: the adhesive comprises components at a blending ratio of BA-10L:BA-11B = 100:2.5 (produced by Japan Coating Resin Co., Ltd.))

### Examples 2 to 16 and Comparative Examples 1 to 7 (Production of decorative materials)

Decorative materials were produced in the same manner as in Example 1 except that various requirements in Example 1 were changed, as shown in Table 1 below.

### Test Example 1

### Appearance observation

After production (immediately after production) of each decorative material, whether or not the *Yuzuhada* irregularities derived from the cork sheet appeared on the decorative sheet surface was confirmed.

The evaluation criteria were as follows.
1: Extensive *Yuzuhada* irregularities were observed.
2: The irregularity level was between 1 and 3.
3: An acceptable level of slight *Yuzuhada* irregularities was observed.
4: An acceptable level of very slight *Yuzuhada* irregularities was observed.
5: No *Yuzuhada* irregularities were observed.

### Environmental test 1: Heat resistance

A heat resistance test was performed by leaving each sample in an oven at a temperature of 60°C for 1 week, and then confirming whether *Yuzuhada* irregularities of the cork sheet appeared on the decorative sheet surface.

The same evaluation criteria as in the appearance observation were used.

### Environmental test 2: Damp heat

A damp heat test was performed by leaving each sample at a temperature of 40°C and a humidity of 90% RH for 1 week, and then confirming whether *Yuzuhada* irregularities of the cork sheet appeared on the decorative sheet surface.

The same evaluation criteria as in the appearance observation were used.

### Pencil hardness test

The starch resistance of each decorative material was evaluated using a pencil hardness tester. The test was performed in accordance with JIS K5600-5-4, except that the tester was set so as to apply a load of 750 g to the edge of each pencil, with the tester being disposed horizontally. Specifically, the test was performed using pencils with cores of 6B, 5B, 4B, 3B, 2B, B, HB, F, H, 2H, 3H, 4H, 5H and 6H in descending softness of core hardness.

The evaluation criteria for scratch resistance were as follows. The maximum hardness at which no scratches or dents were visible was investigated. When the maximum hardness at which no scratches or dents were visible with the naked eye was a core hardness of as soft as 3B or more, the decorative material was evaluated as having good scratch resistance. When scratches or dents were checked, each decorative material was vertically stood and visually confirmed from a distance of 50 cm in a direction perpendicular to the surface of each decorative material. Table 1 shows the hardest core hardness at which no scratches or dents were visually confirmed.

The maximum hardness of each decorative material is shown in the column titled "pencil hardness test" in Table 1.

### Softness (good walking feel)

Using a compression test device, a cylindrical jig with a diameter of 10 mm was pressed into a decorative material at constant speed from the decorative sheet side to compress the decorative material and the displacement was measured under a load of 100 N. The displacement is preferably 100 µm or more.

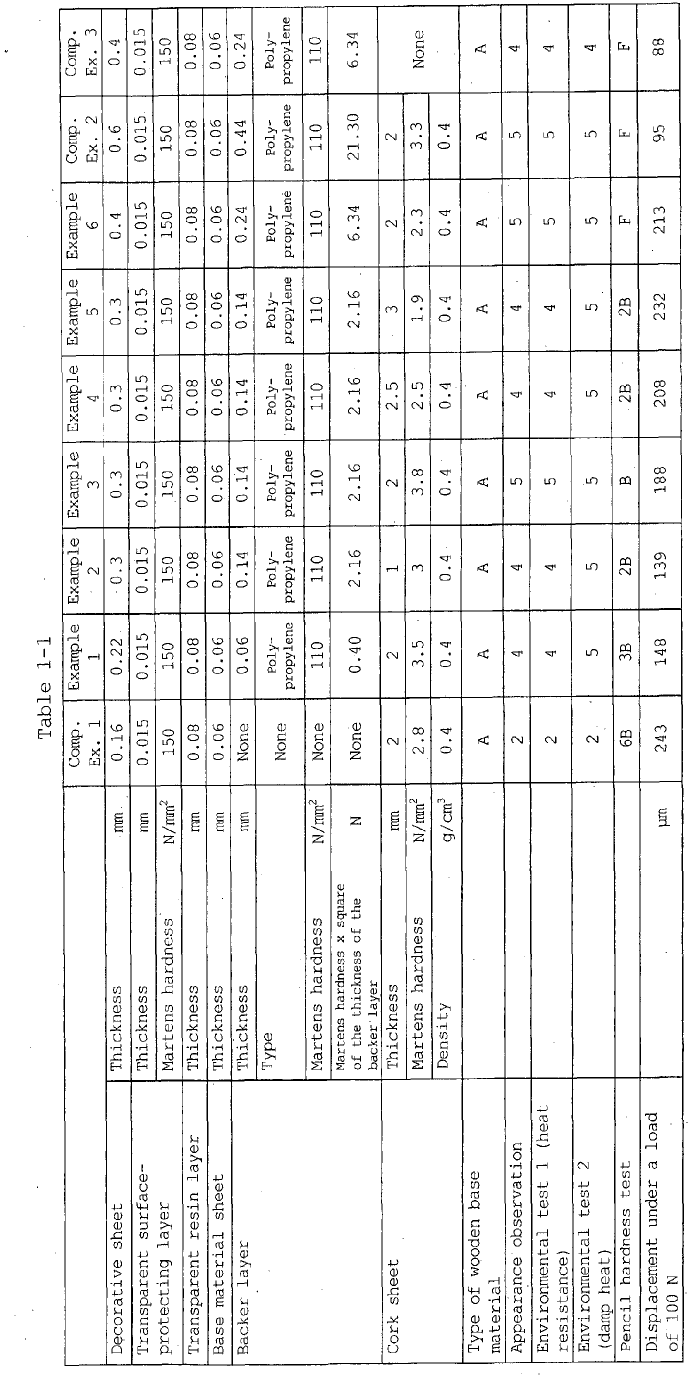

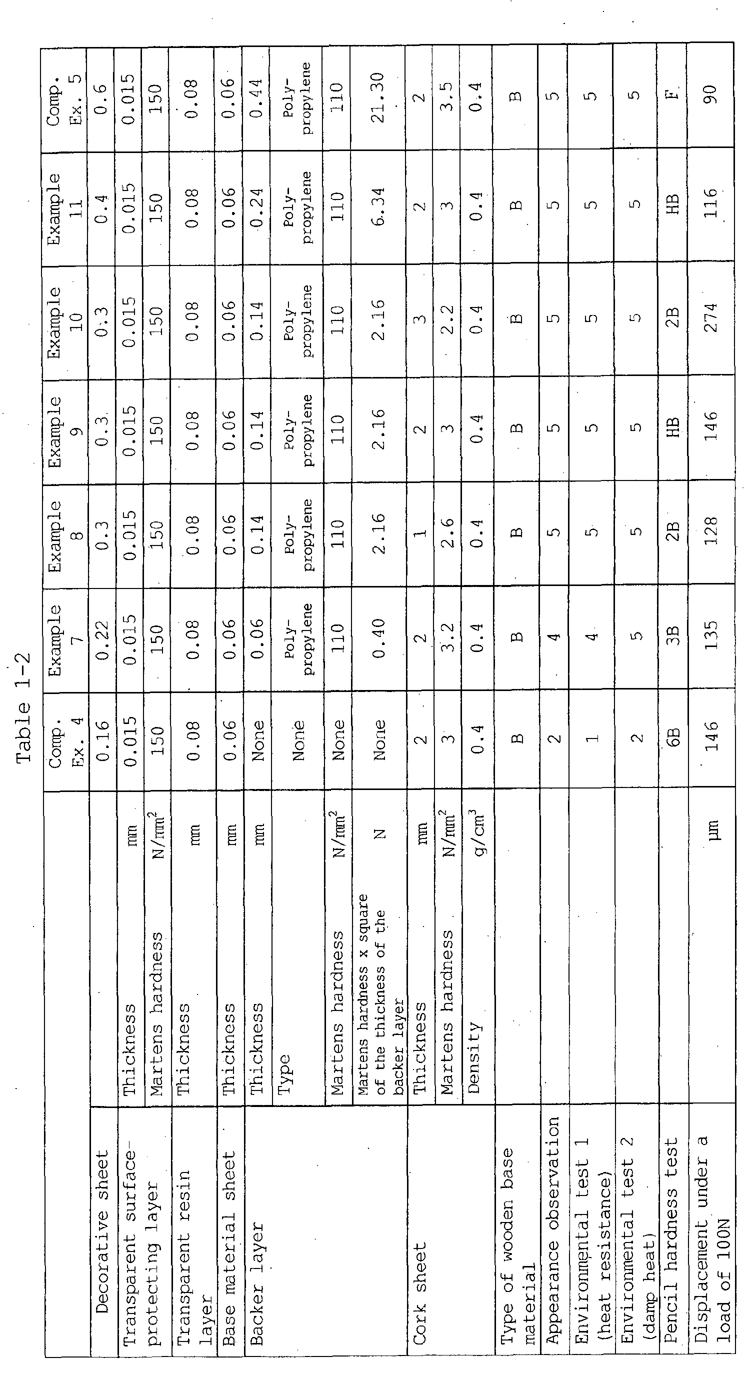

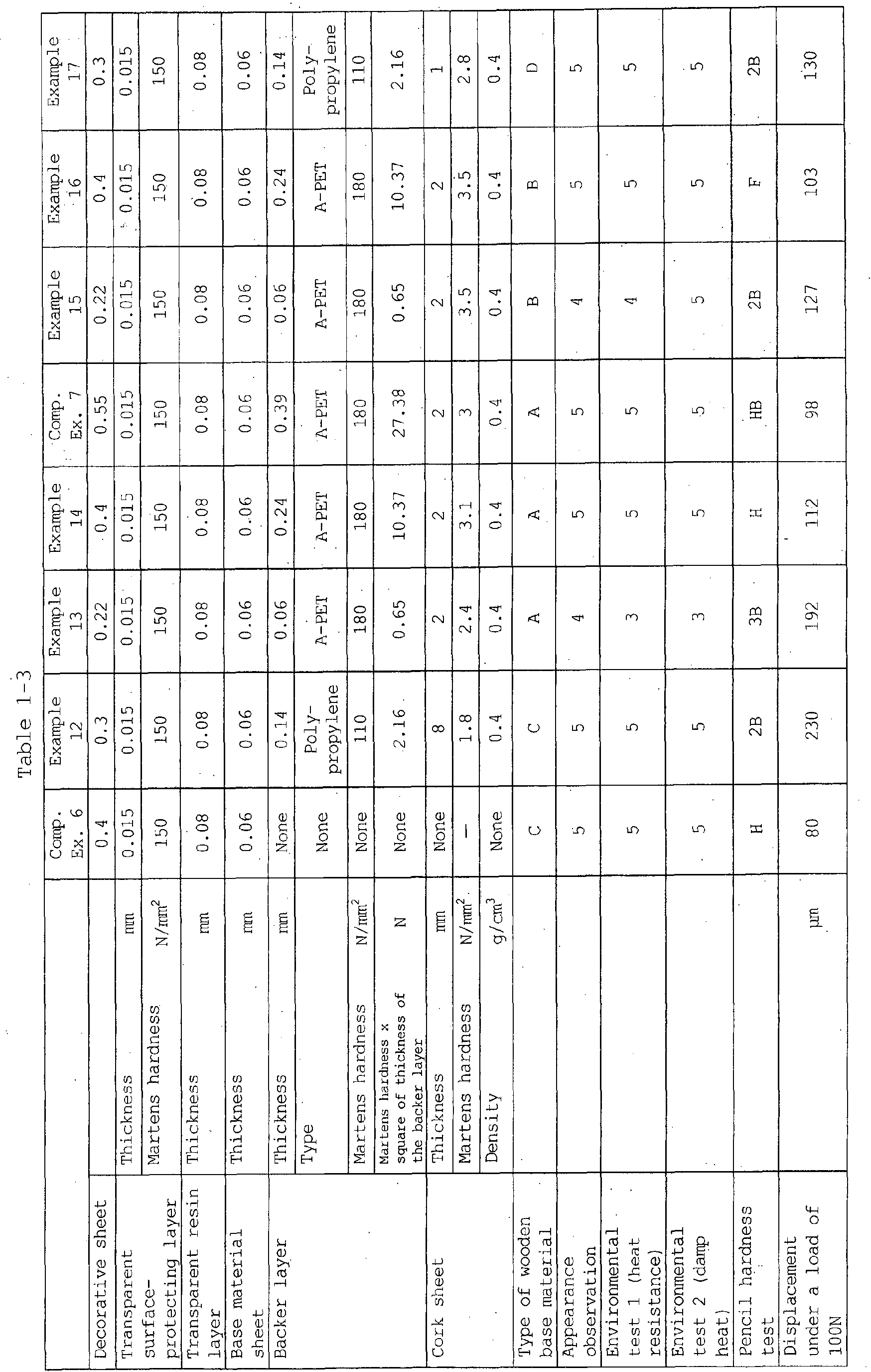

(In Table 1, the types of wooden base materials are as follows:
A: Sakhalin fir plywood (density: 0.42 g/m³),
B: Particleboard (density: 0.75 g/m³),
C: Lauan plywood (density: 0.55 g/m³),
D: High-density fiberboard (density: 0.82 g/m³).)

### Examples 18 and 19 (Production of decorative materials)

A decorative material of Example 18 was produced in the same manner as in Example 3, except that the density of the cork sheet was changed from 0.4 g/cm³ to 0.3 g/cm³.

A decorative material of Example 19 was produced in the same manner as in Example 3, except that the density of the cork sheet was changed from 0.4 g/cm³ to 0.5 g/cm³.

### Test Example 2

The decorative materials produced in Examples 18 and 19 were observed for appearance, subjected to environmental test 1 (heat resistance) and environmental test 2 (damp heat), and tested for pencil hardness and softness (good walking feel) in the same manner as in Test Example 1.

The decorative materials obtained in Examples 3, 18, and 19 were tested for impact resistance (resistance against a dropped object). The test conditions and evaluation criteria used are as follows.

### Impact resistance (Du Pont impact test)

The impact resistance was evaluated in accordance with the Du Pont impact test described in JIS K 5600-5-3 (an impact deformation tester with a punch having a tip radius of 6.35 mm and a weight with a mass of 500 g).

The evaluation criteria are as follows.
1: Extensive denting was observed; or cracking was observed on the decorative sheet.
2: The dent level was between 1 and 3.
3: Denting was observed.
4: The dent level was between 3 and 5.
5: Minor denting was observed.

Table 2 below shows the evaluation results of each test.

**Table 2**

| | | Example 3 | Example 18 | Example 19 |
|---|---|---|---|---|
| Cork sheet | Thickness mm | 2 | 2 | 2 |
| | Martens hardness N/mm² | 3.8 | 3.8 | 3.8 |
| | Density g/cm³ | 0.4 | 0.3 | 0.5 |
| Type of wooden base material | | A | A | A |
| Observation of appearance | | 5 | 5 | 5 |
| Environmental test 1 (heat resistance) | | 5 | 5 | 5 |
| Environmental test 2 (damp heat) | | 5 | 4 | 5 |
| Pencil hardness test | | B | 3B | HB |
| Displacement under a load of 100 N | | 188 | 380 | 140 |
| Du Pont impact test | | 3 | 1 | 4 |

The results of Table 2 show that when a cork sheet having a density of more than 0.3 g/cm³ is used, impact resistance (resistance against a dropped object) is remarkably improved. Description of the Reference Numerals

- 1.: Wooden base material
- 2.: Cork sheet
- 3.: Decorative sheet

## Claims

1. A decorative material comprising a cork sheet and a decorative sheet laminated sequentially on a wooden base material, the decorative sheet having a thickness of more than 0.20 mm and 0.50 mm or less, and the cork sheet having a density of more than 0.3 g/cm³ and 0.5 g/cm³ or less,
wherein the decorative sheet comprises at least a backer layer, a base material sheet, a picture pattern layer, an adhesive layer, a transparent resin layer, and a transparent surface-protecting layer, with the transparent surface-protecting layer being the uppermost surface layer,
the backer layer is a synthetic resin layer and it has a Martens hardness of 10 N/mm² or more and 250 N/mm² or less, and
the Martens hardness (N/mm²) of the backer layer multiplied by the square of the thickness (mm) of the backer layer is 0.3 N or more and 20.0 N or less.

2. The decorative material according to claim 1, wherein the wooden base material is at least one member selected from the group consisting of medium-density wood fiberboard, high-density wood fiberboard, particleboard, coniferous tree plywood, broadleaf tree plywood, and fast-growing plywood.

3. The decorative material according to claim 1 or 2,
wherein the cork sheet has a thickness of 1.0 mm or more and less than 3.0 mm.

4. The decorative material according to any one of claims 1 to 3, wherein the uppermost surface layer of the decorative sheet is an ionizing radiation-curable resin layer.

5. The decorative material according to any one of claims 1 to 4, which has a thickness of 6 mm or more and 20 mm or less.

6. The decorative material according to any one of claims 1 to 5, which is a decorative material for floors.

7. The decorative material according to any one of claims 1 to 6, the cork sheet has a thickness of 1.0 mm or more and less than 3.0 mm, and a Martens hardness of 1.0 N/mm² or more and 20 N/mm² or less, and wherein the wooden base material has a density of 0.40 g/cm³ or more and 1.00 g/cm³ or less.

## Patentansprüche

1. Dekoratives Material, umfassend eine Korkplatte und eine dekorative Platte, nacheinander laminiert auf ein Holzbasismaterial, wobei die dekorative Platte eine Dicke von mehr als 0,20 mm und 0,50 mm oder weniger aufweist und die Korkplatte eine Dichte von mehr als 0,3 g/cm³ und 0,5 g/cm³ oder weniger aufweist,
wobei die dekorative Platte mindestens eine Stützschicht, eine Basismaterialplatte, eine Bildmusterschicht, eine Haftmittelschicht, eine transparente Harzschicht und eine transparente Oberflächenschutzschicht umfasst, wobei die transparente Oberflächenschutzschicht die oberste Oberflächenschicht ist,
wobei die Stützschicht eine Kunstharzschicht ist und eine Martenshärte von 10 N/mm² oder mehr und 250 N/mm² oder weniger aufweist, und
die Martenshärte (N/mm²) der Stützschicht multipliziert mit dem Quadrat der Dicke (mm) der Stützschicht 0,3 N oder mehr und 20,0 N oder weniger beträgt.

2. Dekoratives Material nach Anspruch 1, wobei das Holzbasismaterial mindestens ein Element, ausgewählt aus der Gruppe, bestehend aus mitteldichter Holzfaserplatte, hochdichter Holzfaserplatte, Spanplatte, Nadelholzsperrholz, Laubbaumsperrholz und schnellwachsendem Sperrholz, ist.

3. Dekoratives Material nach Anspruch 1 oder 2, wobei die Korkplatte eine Dicke von 1,0 mm oder mehr und weniger als 3,0 mm aufweist.

4. Dekoratives Material nach einem der Ansprüche 1 bis 3, wobei die oberste Oberflächenschicht der dekorativen Platte eine durch ionisierende Strahlung härtbare Harzschicht ist.

5. Dekoratives Material nach einem der Ansprüche 1 bis 4, das eine Dicke von 6 mm oder mehr und 20 mm oder weniger aufweist.

6. Dekoratives Material nach einem der Ansprüche 1 bis 5, das ein dekoratives Material für Fußböden ist.

7. Dekoratives Material nach einem der Ansprüche 1 bis 6, wobei die Korkplatte eine Dicke von 1,0 mm oder mehr und weniger als 3,0 mm und eine Martenshärte von 1,0 N/mm² oder mehr und 20 N/mm² oder weniger aufweist, und
wobei das Holzbasismaterial eine Dichte von 0,40 g/cm³ oder mehr und 1,00 g/cm³ oder weniger aufweist.

## Revendications

1. Matériau décoratif comprenant une feuille de liège et une feuille décorative stratifiée séquentiellement sur un matériau de base en bois, la feuille décorative présentant une épaisseur de plus de 0,20 mm et de 0,50 ou moins, et la feuille de liège présentant une densité de plus de 0,3 g/cm³ et de 0,5 g/cm³ ou moins,
dans lequel la feuille décorative comprend au moins une couche de support, une feuille de matériau de base, une couche de motif d'image, une couche adhésive, une couche de résine transparente et une couche de protection de surface transparente, avec la couche de protection de surface transparente étant la couche de surface supérieure,
la couche de support est une couche de résine synthétique et elle présente une dureté Martens de 10 N/mm² ou plus et de 250 N/mm² ou moins, et
la dureté Martens (N/mm²) de la couche de support multipliée par le carré de l'épaisseur (mm) de la couche de support est de 0,3 N ou plus et de 20,0 N ou moins.

2. Matériau décoratif selon la revendication 1, dans lequel le matériau de base en bois est au moins un élément choisi dans le groupe constitué par les panneaux de fibres de bois de densité moyenne, les panneaux de fibres de bois de haute densité, les panneaux de particules, les contreplaqués de conifères, les contreplaqués de feuillus et les contreplaqués à croissance rapide.

3. Matériau décoratif selon la revendication 1 ou 2, dans lequel la feuille de liège présente une épaisseur de 1,0mm ou plus et inférieure à 3,0 mm.

4. Matériau décoratif selon l'une quelconque des revendications 1 à 3, dans lequel la couche de surface supérieure de la feuille décorative est une couche de résine durcissable par rayonnement ionisant.

5. Matériau décoratif selon l'une quelconque des revendications 1 à 4, qui présente une épaisseur de 6 mm ou plus et de 20 mm ou moins.

6. Matériau décoratif selon l'une quelconque des revendications 1 à 5, qui est un matériau décoratif pour les sols.

7. Matériau décoratif selon l'une quelconque des revendications 1 à 6, dans lequel la feuille de liège présente une épaisseur de 1,0mm ou plus et inférieure à 3,0 mm et une dureté Martens de 1,0 N/mm² ou plus et de 20 N/mm² ou moins, dans lequel le matériau de base en bois présente une densité de 0,40 g/cm³ ou plus et de 1,00 g/cm³ ou moins.
